Europäisches Patentamt

European Patent Office

Office européen des brevets

(19)

(11) Veröffentlichungsnummer: **0 609 776 A1**

## (12) EUROPÄISCHE PATENTANMELDUNG

(21) Anmeldenummer: **94101203.1**

(51) Int. Cl.5: **C04B 35/00**, H01C 7/04

(22) Anmeldetag: **27.01.94**

(30) Priorität: **05.02.93 DE 4303414**

(43) Veröffentlichungstag der Anmeldung:
**10.08.94 Patentblatt 94/32**

(84) Benannte Vertragsstaaten:
**AT BE DE DK ES FR GB IT LU NL PT SE**

(71) Anmelder: **SIEMENS MATSUSHITA
COMPONENTS GmbH & CO KG
Balanstrasse 73,
Postfach 80 17 09
D-81617 München(DE)**

(72) Erfinder: **Feltz, Adalbert, Prof., Dr. rer. nat.
Burgeggerstrasse 50
A-8530 Deutschlandsberg(AT)**
Erfinder: **Schuster, Hans-Georg, Dr. Dipl.-Ing.
Dr. Robert-Graf-Strasse 42
A-8010 Graz(AT)**

(74) Vertreter: **Fuchs, Franz-Josef, Dr.-Ing. et al
Postfach 22 13 17
D-80503 München (DE)**

(54) **Sinterkeramik für hochstabile Thermistoren und Verfahren zu ihrer Herstellung.**

(57) Eine Sinterkeramik der allgemeinen Formel

$$Fe_zNi_xMn_{3-x-z}O_4$$

mit $x = 0{,}83$ bis $1$ sowie $0 < z < 1{,}6$ wird dadurch hergestellt, daß die Ausgangsstoffe $MnO_x$ und $NiO$ für ein instabiles Stoffsystem einer Nickel-Manganoxid-Spinellphase wie $NiMn_2O_4$ durch Umsetzung mit Eisenoxid in thermodynamisch stabile Spinell-Mischkristalle überführt wird, die sich beim Abkühlen an Luft nicht zersetzen.

FIG 1

EP 0 609 776 A1

Die Erfindung betrifft eine Sinterkeramik für Thermistoren (NTC-Halbleiterkeramik) mit hoher thermischer Stabilität und Empfindlichkeit auf der Basis $Ni_xMn_{3-x}O_4$ mit x > 0.

Die Erfindung betrifft ferner ein Verfahren zum Herstellen einer solchen Sinterkeramik für derartige hochstabile Thermistoren.

Derartige Keramikmaterialien haben auch als dünne Schichten in Strahlungsempfängern hohe Bedeutung erlangt.

Beispielsweise aus der GB-PS 1 266 789 bekannte technische Lösungen gehen von halbleitenden Oxiden der Übergangselemente und deren Kombinationen z. B. in Spinellen aus. Dabei gelangen vielfach Mehrphasensysteme, z. B. Kobalt-Manganoxid-Systeme zur Anwendung, die durch weitere Komponenten wie Kupferoxid, Nickeloxid oder Lithiumoxid (siehe z. B. US-PS 3,219,480) modifiziert werden, ohne daß der Vorteil der Bildung einer einheitlichen Phase angestrebt wird. Der Nennwiderstand $R_{25}$ (elektrischer Widerstand des Thermistors bei T = 25° C) und die für die Empfindlichkeit der Temperaturmessung maßgebliche B-Konstante gemäß der Beziehung

$$R(T) = R_o exp(B/T) = R_{25} exp(1/T - 1/298)$$

wird auf der Basis derartiger mehrphasiger Systeme durch eine entsprechende Reaktionsfuhrung im Sinterprozeß auf variable Werte eingestellt, so daß bei einem gegebenen Versatz die Produktion eines bestimmten Sortiments von Thermistoren möglich ist. Diese Verfahrensweise schließt im allgemeinen eine beträchtliche Streubreite der Daten der Einzelexemplare und insbesondere von Charge zu Charge ein, da die den Thermistor kennzeichnenden elektrischen Parameter je nach dem erreichten Strukturgefüge der Keramik verschiedene Werte annehmen. In derartigen heterogenen Systemen ist die Gleichgewichtszusammensetzung der Phasen im allgemeinen temperaturabhängig, woraus sich negative Wirkungen auf die zeitliche Stabilität der elektrischen Parameter ergeben.

Aus der Siemens-Zeitschrift 47, Januar 1973, Heft 1, Seiten 65 bis 67 ist es bekannt geworden, daß Thermistoren z. B. auf der Basis des Systems $Ni_xMn_{3-x}O_4$ gefertigt werden. Fur den Bereich der Zusammensetzung 0 < x < 1.275 ergibt sich eine weitgehend einheitliche Phase, die die genannten Nachteile einer großen Streubreite nicht mehr aufweist, vorausgesetzt, daß ein Keramikgefüge erreicht wird, was mit der Verwendung eines speziellen Sinterhilfsmittels verknüpft ist. Bei der Fuhrung des Sinterprozesses zur Thermistorfertigung muß bei diesen Oxidhalbleitern mit einheitlichem Phasenbestand beim Unterschreiten der Tempertaur von 720° C an der Luft ein Zerfall in ein heterogenes Gemisch vermieden werden. Dadurch ist der Anwendungsbereich auf etwa 150° C begrenzt.

In Spinellverbindungen des Systems $Ni_xMn_{3-x}O_4$, in denen entsprechend der allgemeinen Formel

$$Mg_zNiMn_{2-z}O_4$$

eine schrittweise Substitution von Mangan durch Magnesium vorgenommen wurde, konnte mit zunehmendem Magnesiumgehalt eine Absenkung der Temperatur, bei der die oxidative Zersetzung beginnt, nachgewiesen und für die Zusammensetzung $MgNiMnO_4$ (z = 1) vollständige Stabilität erreicht werden. Dies ist in der älteren deutschen Patentanmeldung P 42 13 631.6 beschrieben.

Der Nachteil des Zerfalls in ein heterogenes Stoffsystem unter Sauerstoffaufnahme im Bereich niedriger Temperatur bei den bisherigen technischen Losungen kann in Spinellverbindungen $Ni_xMn_{3-x}O_4$, in denen entsprechend der allgemeinen Formel

$$Zn_zNiMn_{2-z}O_4$$

eine schrittweise Substitution von Mangan durch Zink vorgenommen wird, ausgeschlossen werden. Die Spinellverbindungen $Zn_{1/3}NiMn_{5/3}O_4$ und $Zn_{2/3}NiMn_{4/3}O_4$ erweisen sich im Abkühlprozeß bei beliebiger Abheizrate als völlig stabil.

Von Nachteil ist, daß die Temperatur der Sauerstoffabspaltung unter einer $O_2$-Atmosphäre im Bereich hoher Temperatur, die mit der Ausscheidung einer NiO-Phase verbunden ist, von 975° C für $NiMn_2O_4$ auf 800° C für $MgNiMnO_4$, $Zn_{1/3}NiMn_{5/3}O_4$ und $Zn_{2/3}NiMn_{4/3}O_4$ herabgemindert wird. Um eine hinreichende Sinterverdichtung zu erreichen, muß die Prozeßführung daher die obere Stabilitätsgrenze überschreiten und ein heterogenes Stadium durchlaufen, d. h. erst durch eine in der Regel zeitaufwendige Rückoxydation bei Temperaturen < 800° C wird unter Vereinigung der Phasen eine homogene Keramik erhalten. Weiterhin ist die Herstellung phasenhomogener Keramikkörper an den aufwendigen Verfahrensschritt der Herstellung von Oxalatmischkristallen und deren thermische Zersetzung gebunden.

Die Nachteile konnten in Spinellverbindungen der Substitutionsreihe

$$Zn_z \, Fe^{III}_{x-z} \, Ni^{II} \, Mn^{III}_{2-x+z} (0 < z < x)$$

partiell beseitigt werden, indem ausgehend vom Spinell FeNiMnO₄ (x = 1) durch den Einbau von Zn$^{II}$ ein für die Leitfähigkeit erforderlches Äquivalent an Mn$^{IV}$ auf den B-Plätzen des Spinellgitters neben Mn$^{III}$ erzeugt und dabei die obere Zersetzungstemperatur des kubischen Spinells Fe$^{III}$(Ni$^{II}$Mn$^{III}$)O₄ von T$_z$ = 1020° C an Luft auf einen Wert von 950° C herabgemindert wurde, der der oberen Stabilitätsgrenze einer NiMn₂O₄-Keramik entspricht. Dies ist in der älteren deutschen Patentanmeldung P 42 13 629.6 beschrieben worden. Aufgrund des Zinkgehalts war es erforderlich, den aufwendigen Verfahrensweg der Herstellung von Oxalatmischkristallen und deren thermischen Zersetzung bei dieser technischen Lösung beizubehalten.

Der Erfindung liegt die Aufgabe zugrunde, eine Sinterkeramik für Thermistoren mit hoher thermischer Stabilität und Empfindlichkeit auf der Basis Ni$_x$Mn$_{3-x}$O₄ mit x > 0 anzugeben, die hohe thermische Stabilität und Empfindlichkeit aufweist und gegebenenfalls auch als dünne Schichten in Strahlungsempfängern verwendet werden kann.

Ferner liegt der Erfindung die Aufgabe zugrunde, ein Verfahren zum Herstellen einer solchen Sinterkeramik anzugeben, bei dem der Übergang in ein heterogenes System im Prozeß der Sinterführung weitgehend vermieden wird und das in weiten Temperaturgrenzen eine stabile NTC-Keramik gewährleistet.

Zur Lösung dieser Aufgabe ist die Sinterkeramik der eingangs angegebenen Art erfindungsgemäß durch das Merkmal des Patentanspruches 1 gekennzeichnet.

Bevorzugte Ausführungsformen sind durch die Merkmale eines der Unteransprüche 2 bis 4 gekennzeichnet.

Das Verfahren zum Herstellen einer Sinterkeramik der beanspruchten Art ist erfindungsgemäß durch die Merkmale einer der Patentansprüche 4 oder 6 gekennzeichnet.

Bevorzugte Ausführungsformen dieser Vefahren sind durch die Merkmale eines der Unteransprüche 7 oder 8 gekennzeichnet.

Das Wesen der Erfindung besteht darin, durch den Einbau von Fe$^{III}$ in das System Ni$_x$Mn$_{3-x}$O₄ in Reihen

Fe$_z$Ni$_x$Mn$_{3-x-z}$O₄

Spinelle mit für NTC-Anwendungen günstigen Leitfähigkeitsparametern zu erhalten, in denen der Zerfall in verschiedene Oxidphasen unter Sauerstoffaufnahme bei Unterschreiten einer bestimmten Temperatur unterbleibt und deren Zersetzung unter Sauerstoffabspaltung erst bei einer möglichst hohen Temperatur einsetzt, so daß die Sinterverdichtung zur Ausbildung eines einheitlichen Gefüges für eine reproduzierbare Einstellung der Thermistorparameter unter Verzicht auf das aufwendige Verfahren der Herstellung von Oxalatmischkristallen und deren thermische Zersetzung auf dem einfacheren Weg der Kalzination einer Oxid/Karbonatmischung der Ausgangsstoffe, Preßformgebung und anschließender Sinterung erreicht wird. Auf den Einbau von Zn auf A-Plätzen zur Erzeugung von Mn$^{IV}$ auf B-Plätzen kann verzichtet werden, da, wie Mößbauer-Messungen bewiesen haben, Fe$^{III}$-Kationen durch eine partielle Besetzung der B-Plätze bereits die für das Leitfähigkeitsverhalten wesentliche Bildung von Mn$^{IV}$ im B-Untergitter der Spinellstruktur verursachen. Beispielsweise lassen sich mit x = 1 im gesamten Bereich 1/6 < z < 2 lückenlos einheitliche, kubische, thermodynamisch stabile Spinelle herstellen, die eine entsprechende Abstufung in den für NTC-Thermistoranwendungen relevanten Eigenschaftsparametern, insbesondere der B-Konstanten aufweisen.

Im Bereich z > 1 können bei einem etwa bis zu x = 5/6 verminderten Nickelgehalt und dementsprechend vergrößerten Mangan- und Eisengehalt gleichfalls homogene Spinelle erhalten werden, die sich gegenüber einer oxidativen Zersetzung beim Abkühlen an der Luft als stabil erweisen. Sie enthalten einen bestimmten Mn$^{II}$-Gehalt, und demzufolge ist bei diesen Verbindungen die obere Temperaturgrenze einer einsetzenden thermischen Zersetzung unter Abspaltung von Sauerstoff noch weiter heraufgesetzt, was für die Verfahrensführung bei der Sinterverdichtung vorteilhaft ist.

Im Bereich z > 1 kommt es bei der Herabsetzunmg des Nickelgehalts auf Werte x < 1 zur Bildung von Eisen (II). Die damit verbundene Tendenz zur Oxidation unter Fe₂O₃-Ausscheidung vermindert in diesem Bereich die Bildung von Spinellphasen, die an der Luft beim Abkühlen stabil sind.

Vermindert man den Nickelgehalt im Bereich z > 1 für Eisen auf kleinere werte als x = 5/6, wird auch hier aufgrund der Mangan(II)-Bildung und der damit verbundenen Tendenz zur Oxidation unter Mn₂O₃-Ausscheidung die Stabilitätsgrenze überschritten. Abkühlen an der Luft führt zum oxidativen Zerfall der Spinellphase, da die im System Fe$_x$Mn$_{3-x}$O₄ vorhandene breite Mischungslücke bis in diesen Breeich der Zusammensetzung ausgedehnt ist. Will man in diesem Bereich einheitliche Spinelle erhalten, ist es erforderlich, den Sauerstoffpartialdruck im Prozeß des Abkühlens mit der Temperaturabsenkung koordiniert herabzumindern.

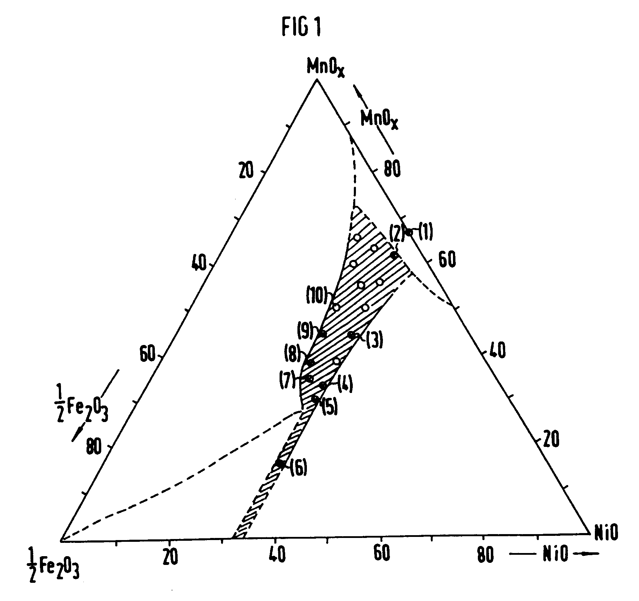

Das Gebiet der beim Abkühlen an der Luft stabilen Spinelle im System $Fe_zNi_xMn_{3-x-z}O_4$ ist in Figur 1 graphisch skizziert. Die im schraffierten Bereich der Zusammensetzung darstellbaren NTC-Halbleiterkeramikproben sind durch eine verhältnismäßig geringe Änderung der Leitfähigkeitsparameter während der Alterung und eine hohe Langzeitstabilität der Werte im gealterten Zustand gekennzeichnet.

Die Erfindung wird an folgenden Beispielen näher erläutert:

Gemenge der entsprechenden Zusammensetzung, bestehend aus $\alpha$-$Fe_2O_3$, Mangancarbonat und Nickelcarbonat mit jeweils bekanntem Gehalt an Metallkationen, werden bei 650° C kalziniert und wahrend des sich anschließenden nassen Mahlens durch Zumischen von 1 mol-% $(Pb_4Ge_3O_{11})_{3/8}$ oder von 0,2 bis 1 mol-% $Bi_2O_3$, bezogen auf $Fe_zNi_xMn_{3-x-z}O_4$ mit Sinterhilfsmittel versetzt. Formgebung durch Pressen sowie Sintern an Luft bei einer Temperatur von 1050 bis 1150° C, deren genauer Wert möglichst auf die je nach Zusammensetzung etwas verschiedene Zersetzungstemperatur einzustellen ist und eine sich anschließende Temperung bei 800 bis 900° C ergeben ein optimales Keramikgefüge mit einer relativen Dichte von 90 bis 95%, das den an Thermistoren hoher Reproduzierbarkeit und Stabilität gesetzten Anforderungen entspricht. In den Tabellen 1 und 2 sind Beispiele der erfindungsgemäßen Sinterkeramik hoher Einheitlichkeit und Phasenstabilität zur Anwendung in Thermistoren hoher Stabilität und Empfindlichkeit zusammen mit der Spinellkeramik $NiMn_2O_4$ angegeben, die die genannten Vorteile nicht aufweist. Die Formeln zur Kationenverteilung stützen sich bei den Proben (1), (4) und (5) auf XPS und Mößbauereffekt-Messungen. Bei den anderen Zusammensetzungen wurde aus dem Vergleich der Leitfähigkeitsparameter und anderen Eigenschaften auf die angegebene Kationenverteilung geschlossen, die einem Vorschlag entspricht.

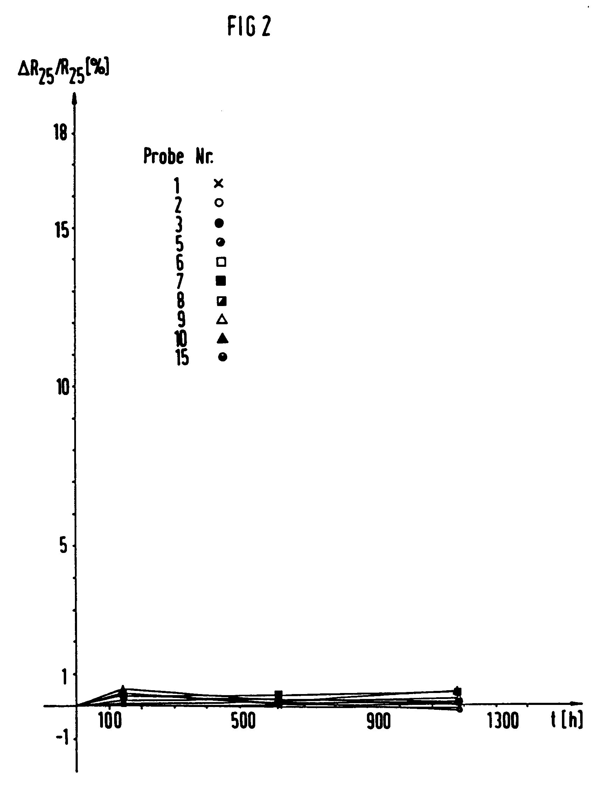

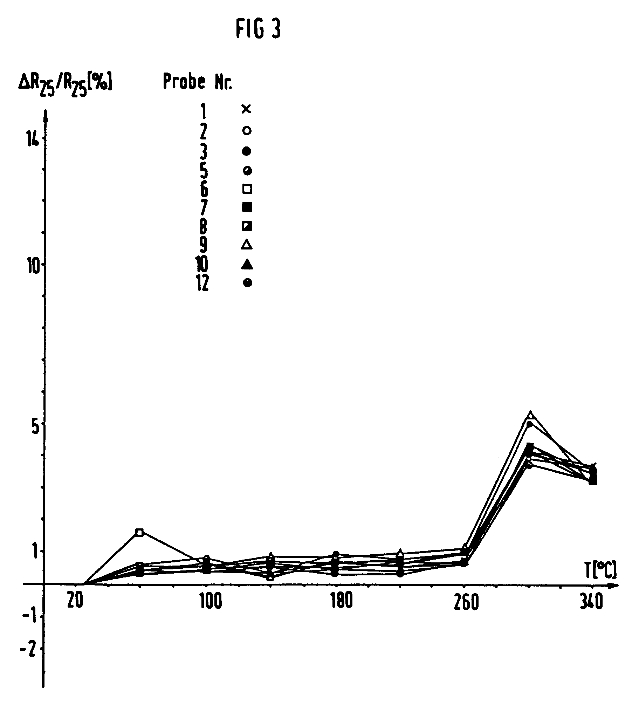

Die hohe Stabilität der elektrischen Eigenschaften der im schraffierten Bereich der Figur 1 eingetragenen Spinellkeramiken wird durch die geringe zeitliche Abhängigkeit der Werte während des Alterns für 10 Exemplare der Probe Nr. (4) in Figur 2 und Figur 3 veranschaulicht.

Tabelle 1: Zusammensetzung und Angaben zur Kationenverteilung in den Spinellkeramiken $Fe_zNi_xMnt3-x-z_O4$

| Nr. | x | z | Zusammensetzung | Kationenverteilung |
|---|---|---|---|---|
| 1 | 0 | 0 | $NiMn_2O_4$ | $Ni^{II}_{0,1} Mn^{II}_{0,9} [Ni^{II}_{0,9} Mn^{III}_{0,2} Mn^{IV}_{0,9}] O_4$ |
| 2 | 1 | 0.17 | $Fe_{0,17} NiMn_{1,83} O_4$ | $Fe^{III}_{0,17} Mn^{II}_{0,83} [NiMn^{III}_{0,17} Mn^{IV}_{0,83}] O_4$ |
| 3 | 1 | 0.67 | $Fe_{0,67} NiMn_{1,33} O_4$ | $Fe^{III}_{0,67} Mn^{II}_{0,33} [NiMn^{II}_{0,33} Mn^{IV}_{0,67}] O_4$ |
| 4 | 1 | 1 | $FeNiMnO_4$ | $Fe^{III}_{0,85} Mn^{II}_{0,15} [Fe^{III}_{0,15} NiMn^{III}_{0,7} Mn^{IV}_{0,15}] O_4$ |
| 5 | 1 | 1.10 | $Fe_{1,10} NiMn_{0,90} O_4$ | $Fe^{III}_{0,9} Mn^{II}_{0,1} [Fe^{III}_{0,2} NiMn^{III}_{0,7} Mn^{IV}_{0,1}] O_4$ |
| 6 | 1 | 1.50 | $Fe_{1,5} NiMn_{0,5} O_4$ | $Fe^{III} [Fe_{0,5} Ni^{II} Mn^{III}_{0,5}] O_4$ |
| 7 | 0.90 | 1.05 | $Fe_{1,05} Ni_{0,90} Mn_{1,05} O_4$ | $Fe^{III}_{0,95} Mn^{II}_{0,05} [Fe^{III}_{0,10} Ni^{II}_{0,90} Mn^{III}_{0,65} Mn^{IV}_{0,35}] O_4$ |
| 8 | 0.83 | 1.0 | $FeNi_{0,83} Mn_{1,17} O_4$ | $Fe^{III}_{0,67} Mn^{II}_{0,33} [Fe^{III}_{0,33} Ni^{II}_{0,83} Mn^{III}_{0,67} Mn^{IV}_{0,17}] O_4$ |
| 9 | 0.83 | 0.83 | $Fe_{0,83} Ni_{0,83} Mn_{1,33} O_4$ | $Fe^{III}_{0,67} Mn^{II}_{0,33} [Ni^{II}_{0,83} Fe^{III}_{0,17} Mn^{III}_{0,83} Mn^{IV}_{0,17}] O_4$ |
| 10 | 0.83 | 0.67 | $Fe_{0,67} Ni_{0,83} Mn_{1,50} O_4$ | $Fe^{III}_{0,67} Mn^{II}_{0,33} [Ni^{II}_{0,83} Mn^{IV}_{0,17} Mn^{III}_1] O_4$ |

Tabelle 2: Elektrische Eigenschaften, Temperatur $T_z$ der einsetzenden 02-Abspaltung und NiO-Ausscheidung sowie relative Dichte der Spinellkeramik $Fe_zNi_{3-x-z}O_4$ (n bezeichnet die Anzahl der vermessenen Exemplare)

| Nr. | D % | n | $T_z$ / °C ($p_{O_2} = 0.21 \cdot 10^5$ Pa) | $\dfrac{\rho 20°C}{\Omega cm}$ | | $\dfrac{B}{K}$ | |
|---|---|---|---|---|---|---|---|
| 1 | 96 | 30 | 960 | 2.000 +- | 400 | 3.774 +- | 3 |
| 2 | 54 | 3 | 876 | 9.900 +- | 200 | 3.740 +- | 4 |
| 3 | 97 | 10 | 916 | 2.130 +- | 90 | 3.325 +- | 14 |
| 4 | 84 | 15 | 1020 | 6.800 +- | 100 | 3.398 +- | 7 |
| 5 | 82 | 5 | 1065 | 7.700 +- | 220 | 3.400 +- | 7 |
| 6 | 83 | 5 | 1120 | 14.880 +- | 150 | 3.340 +- | 3 |
| 7 | 76 | 5 | 1155 | 7.400 +- | 1.400 | 3.464 +- | 7 |
| 8 | 92 | 10 | 1034 | 3.090 +- | 90 | 3.463 +- | 2 |
| 9 | 90 | 10 | 1052 | 4.290 +- | 55 | 3.448 +- | 4 |
| 10 | 91 | 10 | 1090 | 6.4010 +- | 160 | 3.40 +- | 2 |

**Patentansprüche**

1. Sinterkeramik für hochstabile Thermistoren auf der Basis

    $Ni_xMn_{3-x}O_4$

    mit x > 0
    **gekennzeichnet durch** die allgemeine Formel

    $Fe_zNi_xMn_{3-x-z}O_4$

    mit x = 0,84 bis 1, sowie 0 < z < 1,6.

2. Sinterkeramik für hochstabile Thermistoren nach Anspruch 1, **dadurch gekennzeichnet,** daß x = 1 und z = 0,17 bis 1,50 betragen.

3. Sinterkeramik für hochstabile Thermistoren nach Anspruch 1, **dadurch gekennzeichnet,** daß x = 0,83 bis 1 und z = 0,67 bis 1,10 betragen.

4. Sinterkeramik für hochstabile Thermistoren nach Anspruch 1, **gekennzeichnet durch** die Wertepaare x = 1 und z = 0,17, x = 1 und z = 0,67, x = 1 und z = 1, x = 1 und z = 1,50, x = 0,90 und z = 1,05, x = 0,83 und z = 0,83, x = 0,83 und z = 0,67.

5. Verfahren zur Herstellung einer Sinterkeramik für hochstabile Thermistoren nach einem der Ansprüche 1 bis 4, **dadurch gekennzeichnet,** daß die Ausgangsstoffe $MnO_x$ und NiO für ein instabiles Stoffsystem einer Nickel-Manganoxid-Spinellphase wie $NiMn_2O_4$ durch Umsetzung mit Eisenoxid in thermodynamisch stabile Spinell-Misch-Kristalle überfuhrt wird, die sich beim Abkühlen an Luft nicht zersetzen.

6. Verfahren zur Herstellung einer Sinterkeramik für hochstabile Thermistoren nach einem der Ansprüche 1 bis 4, **dadurch gekennzeichnet,** daß ein Gemenge aus Nickelcarbonat, Mangancarbonat oder $\alpha$-Eisen-(III)-Oxid durch Erhitzen auf über 600° C an Luft kalziniert wird, und daß aus diesem Kalzinat nach granulometrischer Aufbereitung und Preßformgebung durch Sintern an Luft bzw. in Sauerstoffatmosphäre die Sinterkeramikkörper erzeugt werden.

7. Verfahren zur Herstellung einer Sinterkeramik für hochstabile Thermistoren nach Anspruch 6, **dadurch gekennzeichnet**, daß dem kalzinierten Gemisch vor oder nach der granulometrischen Aufbereitung ein Sinterhilfsmittel, vorzugsweise Bleigermanat oder Wismutoxid, in für den Sintervorgang erforderlicher Menge zugefügt oder eingemischt wird, wonach die Formgebung zu Tabletten erfolgt, vorzugsweise durch einen Preßvorgang, und daß diese Tabletten bei Temperaturen von 1020 bis 1150° C in Luftatmosphäre unter Bildung einer einheitlichen Spinellphase gesintert werden.

8. Verfahren nach Anspruch 5, 6 oder 7 zur Herstellung einer Sinterkeramik für hochstabile thermistoren nach Anspruch 3 oder 4, **dadurch gekennzeichnet**, daß bei einem Eisenanteil von z > 1 und einem Nickelanteil von x < 1 bis 0,83 beim Abkühlen der gesinterten Tabletten die Temperturabsenkung und der Sauerstoffpartialdruck derart aufeinander abgestimmt werden, daß einheitliche Spinellkristalle entstehen.

FIG 1

## FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | Z. ANORG. ALLG. CHEM. Bd. 619, Nr. 1 , Januar 1993 Seiten 39 - 46 A. FELTZ ET AL. 'Struktur und Eigenschaften stabiler Spinelle in den Reihen MxNiMn(2-x)O4 (M=Li, Fe)' * Seite 40 - Seite 41; Tabelle 2 *<br>--- | 1-5 | C04B35/00 H01C7/04 |
| A | EP-A-0 028 510 (MATSUSHITA ELECTRIC INDUSTRIAL CO., LTD.) * Anspruch 1; Tabellen 4,5 *<br>--- | 1-8 | |
| A | DATABASE WPI Week 8203, Derwent Publications Ltd., London, GB; AN 82-05123E & JP-A-56 160 007 (MATSUSHITA ELEC IND KK) 9. Dezember 1981 * Zusammenfassung *<br>----- | 1-8 | |
| | | | **RECHERCHIERTE SACHGEBIETE (Int.Cl.5)**<br>C04B<br>H01C |

Der vorliegende Recherchenbericht wurde für alle Patentansprüche erstellt

| Recherchenort | Abschlußdatum der Recherche | Prüfer |
|---|---|---|
| DEN HAAG | 25. Mai 1994 | Luethe, H |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

EPO FORM 1503 03.82 (P04C03)